(19) **Europäisches Patentamt / European Patent Office / Office européen des brevets**

(11) **EP 1 693 976 B1**

(12) **EUROPEAN PATENT SPECIFICATION**

(45) Date of publication and mention
of the grant of the patent:
**26.11.2008 Bulletin 2008/48**

(51) Int Cl.:
**H04B 10/18** *(2006.01)*

(21) Application number: **06002060.9**

(22) Date of filing: **01.02.2006**

(54) **Monitoring wavelength dispersion variation using photon absorption**

Wellenlängendispersionsüberwachung durch Verwendung von Photonen Absorption

Surveillance de la variation de dispersion de longueurs d'onde par absorption photonique

(84) Designated Contracting States:
**DE FR GB**

(30) Priority: **18.02.2005 US 62289**

(43) Date of publication of application:
**23.08.2006 Bulletin 2006/34**

(73) Proprietor: **FUJITSU LIMITED**
**Kawasaki-shi,**
**Kanagawa 211-8588 (JP)**

(72) Inventors:
• **Kinoshita, Susumu**
**Fuchu-shi**
**Tokyo 183-0032 (JP)**

• **Tian, Cechan**
**Plano**
**Texas 75025 (US)**

(74) Representative: **HOFFMANN EITLE**
**Patent- und Rechtsanwälte**
**Arabellastrasse 4**
**81925 München (DE)**

(56) References cited:
**EP-A- 1 309 115**          **US-A- 3 840 741**
**US-A1- 2004 000 635**

• XP009099371
• XP009098727
• XP011048169
• XP006003441

**Description**

This invention relates generally to the field of optical networks and more specifically to monitoring wavelength dispersion variation using photon absorption.

A communication network may communicate information using optical signals transmitted as light pulses. An optical signal typically includes spectrum components having different wavelengths. The components travel at different speeds, resulting in wavelength dispersion.

Known techniques for compensating for dispersion include passive compensation and tunable compensation. Passive compensation uses fixed dispersion compensating units, such as dispersion compensating fibers, to compensate for dispersion. Passive compensation works adequately for data rates equal to or less than ten gigabits per second (Gbps), but typically not for higher data rates. Tunable compensation detects dispersion variation, and adjusts the signal in accordance with the detected dispersion variation. Typical dispersion variation monitors for monitoring dispersion variation, however, are not suitable in certain situations. It is generally desirable to monitor dispersion variation in certain situations.

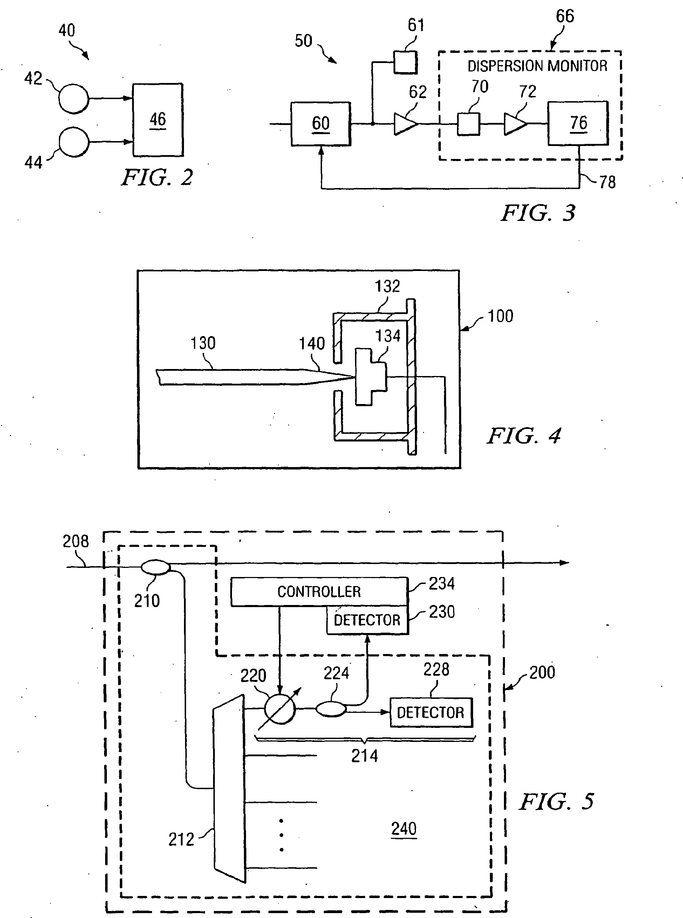

Thesis "Characterisation of two-photon absorption detectors for applications in high-speed optical systems". Reza Salem, Master of Science 2003, describes in the abstract a process of two-photon absorption in optical detectors. Section 2.7.4 describes that in a chirp measurement an important parameter is pulse width. Setion 3.3 describes that spot-size plays a significant role in the TPA process. Figure 3.5 shows that a lens is used to focus the beam to a small spot.

European patent application EP1309115 discloses a chirp measurement apparatus includes a splitting section (11) for splitting input signal light to two paths; a first dispersion medium (12-1) with a total dispersion amount of +D ( NOTEQUAL 0) at a used wavelength, and a second dispersion medium (12-2) with a total dispersion amount of - D ( NOTEQUAL 0) at the used wavelength; first and second nonlinear photo-detecting sections (13-1 and 13-2) for receiving the signal light beams passing through the first and second dispersion media, and for outputting electric signals with the intensities proportional to nth power of the intensities of the signal light beams, where n is greater than one; and a difference detecting section (14) for computing a difference between the electric signals output from the first and second nonlinear photo-detecting sections, and for outputting a differential signal corresponding to the difference as a chirp signal of the input signal light.

US patent application US2004000635 discloses an automatically adjustable arrangement for tuning the accumulated chromatic dispersion present in an optical communication system uses a dispersion variation-based measuring arrangement to determine both the magnitude and sign of the accumulated dispersion. A relatively small portion of a received optical signal including an unknown amount of chromatic dispersion is tapped off at an optical receiver and a small amount of additional dispersion is added to the tapped-off signal so that nonlinear detection can be used to determine both the magnitude and sign of the dispersion present in the transmission signal. This information is then fed back to a tunable dispersion compensator to provide the real-time, automatic correction to the dispersion present in the system.

In accordance with the present invention, disadvantages and problems associated with previous techniques for monitoring wavelength dispersion variation may be reduced or eliminated.

Certain embodiments of the invention may provide one or more technical advantages. A technical advantage of one embodiment may be that a dispersion variation monitor monitors wavelength dispersion variation of a signal in accordance with photon absorption. Photon absorption indicates the shape of the waveform of pulses of the signal. Accordingly, photo absorption may be used to monitor the dispersion variation of the signal.

Another technical advantage of one embodiment is that an optical fiber with a tapered tip is used to focus a signal towards a detector of a dispersion variation monitor. Focusing the signal allows for more photons to arrive at the detector at substantially the same place. Another technical advantage of one embodiment may be that certain components of a dispersion compensation system may be integrated on a semiconductor substrate. Integrating the components may provide for more efficient application of the dispersion compensation system.

One or more other technical advantages may be readily apparent to one skilled in the art from the figures, descriptions, and claims included herein.

According to a first aspect of the present invention, there is provided a system for monitoring wavelength dispersion variation of an optical signal according to appended independent claim 1.

According to a second aspect of the present invention, there is provided a method for monitoring wavelength dispersion variation of an optical signal according to appended independent claim 5.

Preferred embodiments are defined in the appended dependent claims.

FIGURE 1 is a block diagram illustrating one embodiment of a network that includes a node that has a dispersion variation monitor;

FIGURE 2 is a diagram illustrating example photons arriving at one embodiment of a dispersion variation monitor;

FIGURE 3 is a block diagram illustrating one embodiment of a dispersion compensation system that may be used at a node of the network of FIGURE 1;

FIGURE 4 is a block diagram illustrating one embodiment of a fiber and a fiber controller that is used with the detector system of FIGURE 3; and

FIGURE 5 is a block diagram illustrating another embodiment of a dispersion compensation system that may be used at a node of the network of FIGURE 1.

According to one embodiment of the present invention, monitoring wavelength dispersion variation of an optical signal includes receiving the optical signal at a detector. The optical signal comprises photons of different spectrum components. The photons are received at a material of the detector. The material is operable to produce a reaction in response to the arrival of a specific number of photons, such as two photons. Reactions produced by the material in response to receiving the plurality of photons are monitored. Whether there is wavelength dispersion variation among the components is established in accordance with the reactions.

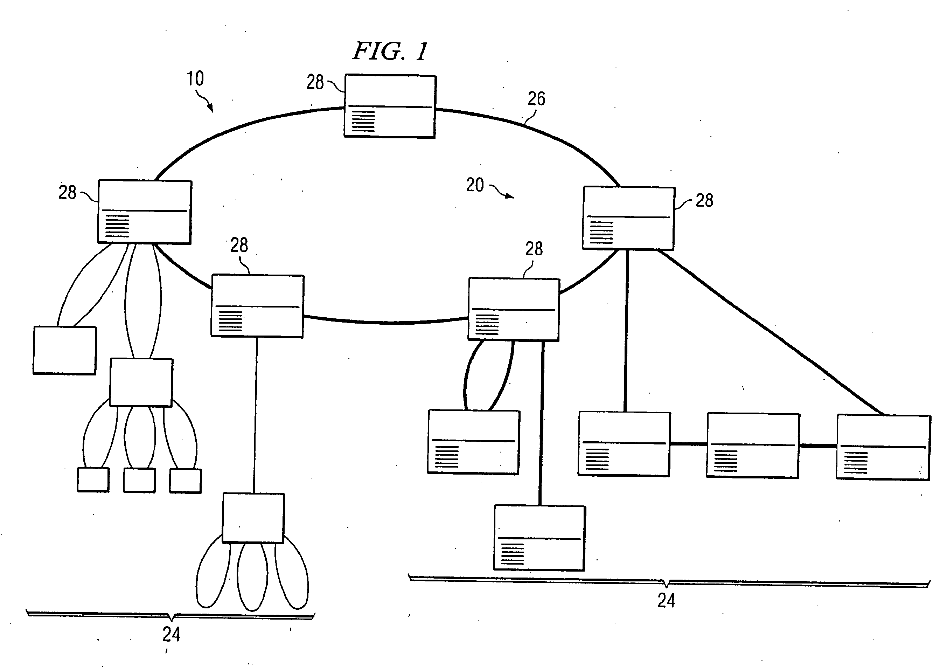

Embodiments of the present invention and its advantages are best understood by referring to FIGURES 1 through 5 of the drawings, like numerals being used for like and corresponding parts of the various drawings.

FIGURE 1 is a block diagram illustrating one embodiment of a network 10 that includes a node that has a dispersion variation monitor. According to the embodiment, the dispersion variation monitor monitors wavelength dispersion variation of a signal in accordance with photon absorption. Photon absorption indicates the shape of the waveform of pulses of the signal. Accordingly, photon absorption may be used to monitor dispersion variation of the signal.

According to the illustrated embodiment, network 10 communicates information through signals. A signal may refer to an optical signal transmitted as light pulses comprising photons. An optical signal may have a frequency of approximately 1550 nanometers, and a data rate of, for example, 10, 20, 40, or over 40 gigabits per second. A signal typically includes one or more components. A component may refer to a portion of light having a specific wavelength or wavelength range.

A component with a smaller wavelength travels through a material at a different speed than that of a component with a larger wavelength, so different components travel at different speeds resulting in a spatial separation. Wavelength dispersion refers to the spatial separation resulting from the different speeds. Wavelength dispersion variation refers to changes in wavelength dispersion.

Wavelength dispersion changes the waveform shape of the pulses of a signal. As an example, when a pulse is transmitted, the waveform shape of the pulse may be narrow. As the pulse travels through a medium, the components of the pulse travel at different speeds, and the waveform shape of the pulse becomes wider.

Dispersion tolerance distance decreases in accordance with the square of the data rate. For example, for no return-to-zero (NRZ) modulation, the distance for a 10 gigabits per second signal is approximately 40 kilometers of single-mode fiber (SMF). For 40 gigabits per second, the distance is approximately 2.5 kilometers. Dispersion may cause problems for data rates over 10 gigabits per second, such as rates greater than 40 gigabits per second.

A signal may comprise any suitable signal, for example, a return-to-zero (RZ) signal, a carrier suppressed return-to-zero (CS-RZ) signal, a CS-RZ differential phase shifted keying (DPSK) signal, or a clock signal. A return-to-zero signal and a clock signal include carrier, blue side sub-carrier, red side sub-carrier, and other components.

A signal may communicate information in packets. A packet may comprise a bundle of data organized in a specific way for transmission, and a frame may comprise the payload of one or more packets organized in a specific way for transmission. A packet may carry any suitable information such as voice, data, audio, video, multimedia, other information, or any combination of the preceding. The packets may comprise any suitable multiplexed packets, such time division multiplexed (TDM) packets, communicated using any suitable protocol such as the Ethernet over synchronous optical network (SONET) protocol.

Network 10 includes a ring 20 coupled to access equipment 24 as shown. A ring may refer to a network of communication devices that has a ring topology. According to one embodiment, ring 20 may comprise an optical fiber ring. For example, ring 20 may comprise a resilient packet ring (RPR).

Ring 20 has nodes 28 coupled by fibers 26. A node may refer to a point of a ring at which packets may be communicated to another node. A node 28 may comprise, for example, a dense wavelength division multiplexer (DWDM). A node may include an adaptive dispersion compensation (ADC) device. An adaptive dispersion compensation device monitors dispersion variation, and compensates for the dispersion in accordance with the determination. The dispersion compensation device may use a dispersion compensator, such as a tunable dispersion compensator, to compensate for the dispersion.

The dispersion compensation device includes a dispersion variation monitor that monitors dispersion variation and instructs the dispersion compensator to compensate for the dispersion. The dispersion variation monitor may monitor wavelength dispersion variation in accordance with photon absorption. A technique for monitoring dispersion variation in accordance with photon absorption is described in more detail with reference to

FIGURE 2.

FIGURE 2 is a diagram 40 illustrating example photons 42 and 44 of an optical signal arriving at one embodiment of a dispersion variation monitor 46. The optical signal comprises a first component and a second component. The first component has a greater wavelength than that of the second component, so the first component travels at a different speed than that of the second component. Accordingly, the signal experiences wavelength dispersion.

The waveform shape of the pulses changes as a result of the wavelength dispersion. Typically, a wider waveform shape indicates more wavelength dispersion, and a narrower waveform shape indicates less wavelength dispersion. A pulse with a narrower waveform shape may include more photons that arrive at monitor 46 at the same time, and a pulse with a wider waveform shape may include fewer photons that arrive at monitor 46 at the same time.

Dispersion variation monitor 46 may include material that may produce a reaction when a predetermined number of photons arrive at substantially the same time at the material. According to the illustrated embodiment, the material reacts when two photons 42 and 44 arrive at the same time. More photons arriving at the material increases the probability that the predetermined number of photons arrive at substantially the same time, thus increasing the number of reactions. Since a pulse with a narrower waveform includes more photons that arrive at the material at the same time, a narrower waveform pulse may generate more reactions than a wider waveform pulse.

Dispersion variation monitor 46 may monitor the reactions occurring at the material. A change in the number of reactions may indicate dispersion variation. Example dispersion variation monitors are described in more detail with reference to FIGURES 3 through 5.

Referring back to FIGURE 1, fibers 26 may refer to any suitable fiber operable to transmit a signal. According to one embodiment, a fiber 26 may represent an optical fiber. An optical fiber typically comprises a cable made of silica glass or plastic. The cable may have an outer cladding material around an inner core. The inner core may have a slightly higher index of refraction than the outer cladding material. The refractive characteristics of the fiber operate to retain a light signal inside of the fiber.

Access equipment 24 may include any suitable device operable to communicate with nodes 28 of ring 20. Examples of access equipment 24 include access gateways, endpoints, softswitch servers, trunk gateways, networks, access service providers, Internet service providers, or other device operable to communicate with nodes 28 of ring 20.

Modifications, additions, or omissions may be made to network 10 without departing from the scope of the invention. The components of network 10 may be integrated or separated according to particular needs. Moreover, the operations of network 10 may be performed by more, fewer, or other devices. Additionally, operations of network 10 may be performed using any suitable logic. Logic may refer to hardware, software, or any combination of hardware and software. As used in this document, "each" refers to each member of a set or each member of a subset of a set.

FIGURE 3 is a block diagram illustrating one embodiment of a dispersion compensation system 50 that may be used at node 28 of network 10 of FIGURE 1. According to the illustrated embodiment, dispersion compensation system 50 includes a dispersion compensator 60, an optical receiver 61, an amplifier 62, and a dispersion variation monitor 66 coupled as shown.

In operation, dispersion compensator 60 receives an optical signal, and send the signal to optical receiver 61 and amplifier 62. Amplifier 62 amplifies the optical signal. Dispersion variation monitor 66 monitors dispersion variation, and instructs dispersion compensator 60 to compensate for the dispersion in accordance with the dispersion variation. For an RZ signal, the monitoring accuracy may be greater than approximately 50 picoseconds per nanometer at 10 gigabits per second.

Dispersion compensator 60 compensates for dispersion of an optical signal, and may comprise, for example, a tunable dispersion compensator (TDC). According to one embodiment, dispersion compensator 60 receives an optical signal, and focuses the signal onto a diffraction grating. The grating separates the channels of the signal and spreads out the components of each channel. The components are then directed towards a phase adjuster that adjusts the phase of the components. As an example, a phase adjuster may comprise a microelectromechanical system (MEMS) that includes micromirrors. Each micromirror applies a phase adjustment to a component. Adjusted components are then combined at the diffraction grating.

Amplifier 62 amplifies the optical signal. Amplifier 62 may comprise an optical repeater that amplifies an optical signal without opto-electrical or electro-optical conversion. Amplifier 62 may comprise an optical fiber doped with a rare-earth element. When a signal passes through the fiber, external energy is applied to excite the atoms of the doped portion of the optical fiber, which increases the intensity of the optical signal. As an example, amplifier 62 may comprise an erbium-doped fiber amplifier (EDFA).

Dispersion variation monitor 66 monitors dispersion variation and instructs dispersion compensator 60 to compensate for the dispersion in accordance with the variation. According to the illustrated embodiment, dispersion variation monitor 66 includes a detector 70, an amplifier 72, and a voltage monitor 76.

Detector 70 monitors dispersion variation of an optical signal. Detector 70 may comprise a material that may produce a reaction when a predetermined number of photons arrive at substantially the same time at substantially the same place of the material. For example, the material may release an electron when a predetermined number of photons arrive at substantially the same time at substantially the same place of the material. More photons arriving at the material increases the probability that the material will produce reactions. Substantially the same place may refer to the area in which the number of photons may arrive to produce the reaction. Substantially the same time may refer to the time period in which the number of photons may arrive to produce the reaction.

The material may be selected to respond to a predetermined number of photons. According to one embodiment, the material may be selected such that the band gap energy Eg of the material may react to a number n of photons having photon energy hv. To detect n photons, a material with a band gap energy $E_g$ may be selected according to Equation (1):

$$(n\text{-}1)\, h\nu \ \leq \ E_g \ \leq \ nh\nu \qquad\qquad\qquad (1)$$

For example, a material with an energy Eg may be selected according to Equation (2) to detect two photons:

$$h\nu \ \leq \ E_g \ \leq \ 2h\nu \qquad\qquad\qquad (2)$$

According to one embodiment, detector 70 may comprise a photodiode such as an avalanche photodiode. An avalanche photodiode comprises a semiconductor material such as silicon. Silicon may release an electron when two photons arrive at substantially the same time at substantially the same place. That is, two photons may generate one electron-hole pair. The photon current is proportional to the square of the input power.

An avalanche photodiode internally amplifies a photocurrent by an avalanche process. When incident photons come into contact with an active region of the semiconductor material, electrons may be generated. A voltage may be applied across the active region to accelerate the electrons as they move through the active region. As the electrons collide with electrons of the semiconductor material, more electrons become part of the photocurrent, resulting in avalanche multiplication. Avalanche multiplication continues until the electrons move out of the active region.

Amplifier 72 amplifies the output, such as an electrical current, received from detector 70. Amplifier 72 may comprise a low-frequency electrical amplifier. Voltage monitor 76 monitors the voltage of the amplified current. The voltage changes even if the signal has the same optical power. A change in voltage indicates wavelength dispersion variation. Voltage monitor 76 instructs dispersion compensator 60 through electrical feedback 78 to compensate for the dispersion in accordance with the monitored dispersion variation.

Modifications, additions, or omissions may be made to dispersion compensation system 50 without departing from the scope of the invention. The components of dispersion compensation system 50 may be integrated or separated according to particular needs. Moreover, the operations of dispersion compensation system 50 may be performed by more, fewer, or other components.

FIGURE 4 is a block diagram illustrating an embodiment of a detector system 100 for being used with dispersion variation monitor 66 of FIGURE 3. According to the illustrated embodiment, detector system 100 includes a fiber 130 and a detector 132 with detector material 134 arranged as shown. Detector 132 and detector material 134 may be substantially similar to detector 70 of FIGURE 2.

Fiber 130 comprises an optical fiber operable to focus the signal towards detector material 134. According to the illustrated embodiment, fiber 130 has a tip 140 operable to focus the optical signal. According to the embodiment, tip 140 is tapered to focus the components. The slope of the taper may be approximately 8 micrometers per 10 micrometers.

Fiber 130 focuses the signal on a focusing area. A focusing area may refer to the particular area of detector material 134 that receives the photons of the signal. The photon current is inversely proportional to the focusing area. Accordingly, decreasing the focusing area increases the photon current. The focusing area may be approximately 2.5 microns in diameter.

The components of detector system 100 may be integrated or separated according to particular needs. Moreover, the operations of detector system 100 may be performed by more, fewer, or other components.

FIGURE 5 is a block diagram illustrating another embodiment of a dispersion compensation system 200 that may be used at node 28 of network 10 of FIGURE 1. According to the illustrated embodiment, dispersion compensation system 200 includes an input 208, a splitter 210, a demultiplexer 212, a wave monitor 214, a photodiode 230, and a controller 234.

Input 208 receives an optical signal. Splitter 210 splits the optical signal into a monitored signal and a pass-through signal. Pass-through signal passes through dispersion variation monitor 200. Monitored signal is transmitted to demultiplexer 212. Demultiplexer 212 operates as a wave separator and demultiplexes the signal into individual waves. According to another embodiment, a filter may be used as a wave separator to select individual waves.

Wave monitor 214 receives an individual wave from demultiplexer 212, and monitors the wave for dispersion variation. According to the illustrated embodiment, wave monitor 214 includes an attenuator 220, a coupler 224, and a detector 228. Attenuator 220 attenuates the wave received from demultiplexer 212, and keeps the optical power to the dispersion monitor constant. Attenuator 220 may comprise a variable optical attenuator. Coupler 224 directs the wave to detector 228 and detector 230. Detector 228 monitors dispersion variation of the wave. Detector 228 may be substantially similar to detector 70 of FIGURE 2. Detector 230 detects the optical power and provides the feedback signal for attenuator 220 to maintain a constant optical power. Controller 232 receives output from detector 230, and instructs attenuator 220 to attenuate a wave.

According to one embodiment, certain components of dispersion compensation system 200 may be provided at an integrated portion 240. As an example, certain components may be formed from layers disposed outwardly from a semiconductor substrate such as a silicon substrate. According to the illustrated embodiment, integrated portion 240 may comprise splitter 210, demultiplexer 212, and wave monitor 214. Integrated portion 240, however, may include any combination of any of components of dispersion variation monitor 200.

Modifications, additions, or omissions may be made to dispersion compensation system 200 without departing from the scope of the invention. The components of dispersion compensation system 200 may be integrated or separated according to particular needs. Moreover, the operations of dispersion compensation system 200 may be performed by more, fewer, or other components.

Certain embodiments of the invention may provide one or more technical advantages. A technical advantage of one embodiment may be that a dispersion variation monitor monitors wavelength dispersion variation of a signal in accordance with photon absorption. Photon absorption indicates the shape of the waveform of pulses of the signal. Accordingly, photon absorption may be used to monitor the dispersion variation of the signal.

According to the invention an optical fiber with a tapered tip is used to focus a signal towards a detector of a dispersion variation monitor. Focusing the signal allows for more photons to arrive at the detector at substantially the same place. Another technical advantage of one embodiment may be that certain components of a dispersion compensation system may be integrated on a semiconductor substrate. Integrating the components may provide for more efficient application of the dispersion compensation system.

## Claims

**1.** A system (50) for monitoring wavelength dispersion variation of a light wave comprising a plurality of photons, comprising:

a detector (70) arranged to receive said light wave, the detector comprising a material (134) arranged to:

receive the plurality of photons;
produce an absorption reaction in response to the arrival of a predetermined number of photons of the plurality of photons at an area in which the arrival of the predetermined number of photons may produce an absorption reaction;
generate an electron-hole pair if the predetermined number of photons are received at substantially the same time; and
fail to generate the electron-hole pair if the predetermined number of photons are not received at substantially the same time;

a monitor (76) arranged to monitor an amplified output of said detector (70); and
an optical fiber (130);
**characterized in that** the optical fiber (130) has a tapered end (140) arranged to focus the optical signal towards the material (134).

**2.** The system (50) of Claim 1, wherein the material (134) has a band gap energy within a range defined by and including n-1 times and n times the photon energy of each of the predetermined number of photons (42, 44), wherein the predetermined number is represented by n.

**3.** The system (50) of Claim 1, wherein:

the material (134) is arranged to generate a current in response to the plurality of absorption reactions;

the system is arranged to amplify the current; and

the monitor (76) is arranged to monitor the absorption reactions produced by the material in response to the plurality of absorption reactions by measuring a voltage corresponding to the amplified current.

**4.** The system of any of Claims 1 - 3, integrated on a semiconductor substrate.

**5.** A method for monitoring wavelength dispersion variation of a light wave comprising a plurality of photons, comprising:

receiving in a detector (70) the light wave, wherein a material of the detector:

receives the plurality of photons;

produces an absorption reaction in response to the arrival of a predetermined number of photons of the plurality of photons at an area in which the arrival of the predetermined number of photons may produce an absorption reaction;

generates an electron-hole pair if the predetermined number of photons are received at substantially the same time; and

fails to generate the electron-hole pair if the predetermined number of photons are not received at substantially the same time;

monitoring an amplified output of said detector (70),

**characterised in that** a tapered end of

an optical fiber (130) focuses the optical signal towards the material (134).

**6.** The method of Claim 5, wherein the material (134) has a band gap energy within a range defined by and including n-1 times and n times the photon energy of each of the predetermined number of photons (42, 44), wherein the predetermined number is represented by n.

**7.** The method of Claim 5, further comprising:

generating in the material (134) a current in response to the plurality of absorption reactions;

amplifying the current; and

monitoring the absorption reactions produced by the material in response to the plurality of absorption reactions by measuring a voltage corresponding to the amplified current.

**Patentansprüche**

**1.** Ein System (50) zum Überwachen von Wellenlängendispersionsvariation einer eine Vielzahl von Photonen umfassenden Lichtwelle, umfassend:

einen Detektor (70), der angeordnet ist zum Empfangen der Lichtwelle, wobei der Detektor ein Material (134) umfasst, das angeordnet ist zum:

Empfangen der Vielzahl von Photonen;

Erzeugen einer Absorptionsreaktion in Reaktion auf die Ankunft einer vorbestimmten Anzahl von Photonen der Vielzahl von Photonen bei einem Gebiet, in dem die Ankunft der vorbestimmten Anzahl von Photonen eine Absorptionsreaktion erzeugen kann;

Erzeugen eines Elektron-Loch-Paares, wenn die vorbestimmte Anzahl von Photonen zur im Wesentlichen gleichen Zeit empfangen wird; und

nicht Erzeugung des Elektron-Loch-Paares, wenn die vorbestimmte Anzahl von Photonen nicht zur im Wesentlichen gleichen Zeit empfangen wird;

eine Überwachungseinheit (76), die angeordnet ist zum Überwachen einer verstärkten Ausgabe des Detektors (70); und

eine optische Faser (130);

**dadurch gekennzeichnet, dass** die optische Faser (130) ein konisches Ende (140) aufweist, das angeordnet ist zum Fokussieren des optischen Signals in Richtung des Materials (134).

**2.** Das System (50) nach Anspruch 1, wobei das Material (134) eine Bandlückenenergie innerhalb eines Bereichs aufweist, der definiert ist durch und n-1 mal und n mal die Photonenenergie von jedem der vorbestimmten Anzahl von Photonen (42, 44) enthält, wobei die vorbestimmte Anzahl durch n repräsentiert ist.

**3.** Das System (50) nach Anspruch 1, wobei:

das Material (134) angeordnet ist zum Erzeugen eines Stroms in Reaktion auf die Vielzahl von Absorptionsreaktionen;

das System angeordnet ist zum Verstärken des Stroms; und

die Überwachungseinheit (76) angeordnet ist zum Überwachen der Absorptionsreaktionen, die von dem Material erzeugt werden in Reaktion auf die Vielzahl von Absorptionsreaktionen, durch Messen einer Spannung, die mit dem verstärkten Strom korrespondiert.

**4.** Das System nach einem der Ansprüche 1 bis 3, das auf einem Halbleitersubstrat integriert ist.

**5.** Ein Verfahren zum Überwachen von Wellenlängendispersionsvariation einer eine Vielzahl von Photonen umfassenden Lichtwelle, umfassend:

Empfangen der Lichtwelle in einem Detektor (70), wobei ein Material (134) des Detektors:

die Vielzahl von Photonen empfängt;

eine Absorptionsreaktion in Reaktion auf die Ankunft einer vorbestimmten Anzahl von Photonen der Vielzahl von Photonen bei einem Gebiet erzeugt, in dem die Ankunft der vorbestimmten Anzahl von Photonen eine Absorptionsreaktion erzeugen kann;

ein Elektron-Loch-Paar erzeugt, wenn die vorbestimmte Anzahl von Photonen zur im Wesentlichen gleichen Zeit empfangen wird; und

das Elektron-Loch-Paar nicht erzeugt wird, wenn die vorbestimmte Anzahl von Photonen nicht zur im Wesentlichen gleichen Zeit empfangen wird;

Überwachen einer verstärkten Ausgabe des Detektors (70),
**dadurch gekennzeichnet, dass** ein konisches Ende einer optischen Faser (130) das optische Signal in Richtung des Materials (134) fokussiert.

**6.** Das Verfahren nach Anspruch 5, wobei das Material (134) eine Bandlückenenergie innerhalb eines Bereichs aufweist, der definiert ist durch und n-1 mal und n mal die Photonenenergie von jedem der vorbestimmten Anzahl von Photonen (42, 44) enthält, wobei die vorbestimmte Anzahl durch n repräsentiert ist.

**7.** Das Verfahren nach Anspruch 5, ferner umfassend:

Erzeugen in dem Material (134) eines Stroms in Reaktion auf die Vielzahl von Absorptionsreaktionen;
Verstärken des Stroms; und
Überwachen der Absorptionsreaktionen, die von dem Material erzeugt werden in Reaktion auf die Vielzahl von Absorptionsreaktionen, durch Messen einer Spannung, die mit dem verstärkten Strom korrespondiert.

**Revendications**

**1.** Système (50) pour surveiller la variation de dispersion de longueur d'onde d'une onde lumineuse comportant une pluralité de photons, comportant :

un détecteur (70) agencé pour recevoir ladite onde lumineuse, le détecteur comportant un matériau (134) agencé pour :

recevoir la pluralité de photons ;
produire une réaction d'absorption en réponse à l'arrivée d'un nombre prédéterminé de photons de la pluralité de photons en une zone dans laquelle l'arrivée du nombre prédéterminé de photons peut produire une réaction d'absorption;
générer une paire électron-trou si le nombre prédéterminé de photons est reçu sensiblement simultanément ; et

ne pas générer de paire d'électron-trou si le nombre prédéterminé de photons ne sont pas reçus sensiblement simultanément ;

un moniteur (76) agencé pour surveiller une sortie amplifiée dudit détecteur (70) ; et

une fibre optique (130) ;

**caractérisé en ce que** la fibre optique (130) présente une extrémité conique (140) agencée pour concentrer le signal optique sur le matériau (134).

2. Système (50) selon la revendication 1, dans lequel le matériau (134) possède une énergie de bande interdite à l'intérieur d'une plage définie par et comprenant n-1 fois et n fois l'énergie photonique de chacun du nombre prédéterminé de photons (42, 44), dans lequel le nombre prédéterminé est représenté par n.

3. Système (50) selon la revendication 1, dans lequel :

le matériau (134) est agencé pour générer un courant en réponse à la pluralité des réactions d'absorption;

le système est agencé pour amplifier le courant ; et

le moniteur (76) est agencé pour surveiller les réactions d'absorption produites par le matériau en réponse à la pluralité des réactions d'absorption en mesurant une tension correspondant au courant amplifié.

4. Système selon l'une quelconque des revendications 1-3, intégré sur un substrat semi-conducteur.

5. Procédé pour surveiller la variation de dispersion de longueur d'onde d'une onde lumineuse comportant une pluralité de photons, comportant :

la réception dans un détecteur (70) de l'onde lumineuse, dans lequel un matériau du détecteur :

reçoit la pluralité de photons ;

produit une réaction d'absorption en réponse à l'arrivée d'un nombre prédéterminé de photons de la pluralité de photons en une zone dans laquelle l'arrivée du nombre prédéterminé de photons peut produire une réaction d'absorption;

génère une paire électron-trou si le nombre prédéterminé de photons est reçu sensiblement simultanément; et

ne génère pas de paire électron-trou si le nombre prédéterminé de photons ne sont pas reçus sensiblement au même moment ;

la surveillance d'une sortie amplifiée dudit détecteur (70),

**caractérisé en ce qu'**une extrémité conique d'une fibre optique (130) concentre le signal optique vers le matériau (134).

6. Procédé selon la revendication 5, dans lequel le matériau (134) possède une énergie de bande interdite à l'intérieur d'une plage définie par et comprenant n-1 fois et n fois l'énergie photonique de chacun du nombre prédéterminé de photons (42, 44), dans lequel le nombre prédéterminé est représenté par n.

7. Procédé selon la revendication 5, comportant en outre :

la génération dans le matériau (134) d'un courant en réponse à la pluralité de réactions d'absorption ;

l'amplification du courant ; et

la surveillance des réactions d'absorption produites par le matériau en réponse à la pluralité des réactions d'absorption en mesurant une tension correspondant au courant amplifié.

*FIG. 1*

EP 1 693 976 B1

FIG. 2

FIG. 3

DISPERSION MONITOR

FIG. 4

CONTROLLER

DETECTOR

DETECTOR

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1309115 A
- US 2004000635 A